Europäisches Patentamt

European Patent Office

Office européen des brevets

(19)

(11) EP 0 835 480 B1

(12) **EUROPEAN PATENT SPECIFICATION**

(45) Date of publication and mention
of the grant of the patent:
**24.11.2004 Bulletin 2004/48**

(21) Application number: **96926695.6**

(22) Date of filing: **21.06.1996**

(51) Int Cl.$^7$: **G05B 19/418**, G07C 3/14

(86) International application number:
**PCT/US1996/010757**

(87) International publication number:
**WO 1997/001802 (16.01.1997 Gazette 1997/04)**

(54) **STATISTICAL TOLERANCING**

STATISTISCHE TOLERANZBERECHNUNG

CALCUL STATISTIQUE DE TOLERANCES

(84) Designated Contracting States:
**DE FR GB**

(30) Priority: **28.06.1995 US 593**
**13.09.1995 US 3725**
**22.04.1996 US 16206**

(43) Date of publication of application:
**15.04.1998 Bulletin 1998/16**

(73) Proprietor: **THE BOEING COMPANY**
**Seattle, Washington 98124-2207 (US)**

(72) Inventors:
• **ATKINSON, Robert, E.**
**Wichita, KS 67218 (US)**
• **MILLER, Teresa, S.**
**Wichita, KS 67218 (US)**

• **SCHOLZ, Friedrich-Wilhelm**
**Seattle, WA 98133 (US)**

(74) Representative: **Bartelds, Erik et al**
**Arnold & Siedsma,**
**Advocaten en Octrooigemachtigden,**
**Sweelinckplein 1**
**2517 GK Den Haag (NL)**

(56) References cited:
EP-A- 0 449 476    EP-A- 0 555 524
EP-A- 0 644 470    US-A- 3 946 212
US-A- 4 918 627    US-A- 5 033 014
US-A- 5 047 947    US-A- 5 323 333

• **MANUFACTURING REVIEW, vol. 7, no. 4,**
**December 1994, NEW YORK US, pages 304-311,**
**XP000482443 SRINIVASAN : "On Interpreting**
**Statistical Tolerancing"**

EP 0 835 480 B1

**Description**

This invention relates to methods for meeting end item/assembly tolerance criteria for large flexible parts, and for identifying the tolerance path starting with the end item/assembly feature through all detail parts in the path, and for selecting tolerances of detail part locating features in the tolerance path. It also considers the relationship of part tolerances to tool tolerances, and the use of a modifying factor to account for detail part process mean shift.

BACKGROUND OF THE INVENTION

Traditional arithmetic tolerancing simply adds all the tolerances in a tolerance stack-up at the extremes of the drawing tolerances to predict a "worst case" assembly variation. It is important to note that if parts are built within tolerance and the assembly was correctly analysed, a worst case approach assures 100% good assemblies.

Statistical tolerancing takes advantage of the fact that assemblies rarely or never stack in a worst case manner, and accepts the possibility that a small percentage of assemblies will fail to meet tolerance requirements. Under this approach, the tolerances of the detail parts can be increased because it can be shown that the statistical chance of worst case tolerance accumulation is small. Analysis indicates that the economic advantage accruing from the use of statistical tolerancing and the larger detail tolerances they make possible exceeds the cost of reworking or even scrapping the few assemblies that fail to meet the tolerance requirements. When statistical tolerancing is used to develop drawing requirements, both the design calculations and part inspection plans are more involved so normally only critical dimensions will be statistically controlled.

An assembly method known as "determinant assembly" is an approach to the production of large flexible parts and assemblies, such as airplanes, that eliminates the use of most traditional "hard tooling". An example of "determinant assembly" used to make airplane fuselage panels and fuselages is disclosed in U.S. patent application no. 07/964,533 entitled "Panel and Fuselage Assembly" filed on October 13, 1992, by Micale and Strand, published as US-A-5,560,102. Another example of "determinant assembly" used in the airplane industry, this time to make airplane wings, is disclosed in U.S. provisional application 60/013,986 entitled "Determinant Wing Assembly" filed on March 22, 1996, by Munk and Strand which corresponds to WO-A-9734734. To ensure that the assemblies, designed using the determinant assembly method, can be assembled successfully, tolerances should be analysed to insure that the specified drawing tolerances will be producible and will support the preferred manufacturing plan/assembly sequence. Typical tolerance stack-ups for airplane assemblies require that a statistical tolerance analysis be performed in order to predict good assemblies made with producible detail part tolerances.

The "population" of manufactured parts, as used herein, is a term used to describe sets of numbers or values, consisting of measurements or observations about those parts. Populations of parts and the measurements thereof are described herein by distributions of these values. Such a description is usually given in terms of a frequency distribution, a probability distribution, or a density function with values given by f(x). Two parameters used to describe a population are its mean $\mu$ and its standard deviation $\sigma$, wherein $\sigma^2$ called the population variance. These parameters characterize the center or location of a population and the variation around the center. More specifically, these parameters are defined in terms of f(x) by

$$\mu = \begin{cases} \sum_x xf(x) & \text{discrete} \\ \int xf(x)dx & \text{continuous} \\ \approx \sum_x xf(x)\Delta x \end{cases}$$

$$\sigma^2 = \begin{cases} \sum_x (x-\mu)^2 f(x) & \text{discrete} \\ \int (x-\mu)^2 f(x)dx & \text{continuous} \\ \approx \sum_x (x-\mu)^2 f(x)\Delta x \end{cases}$$

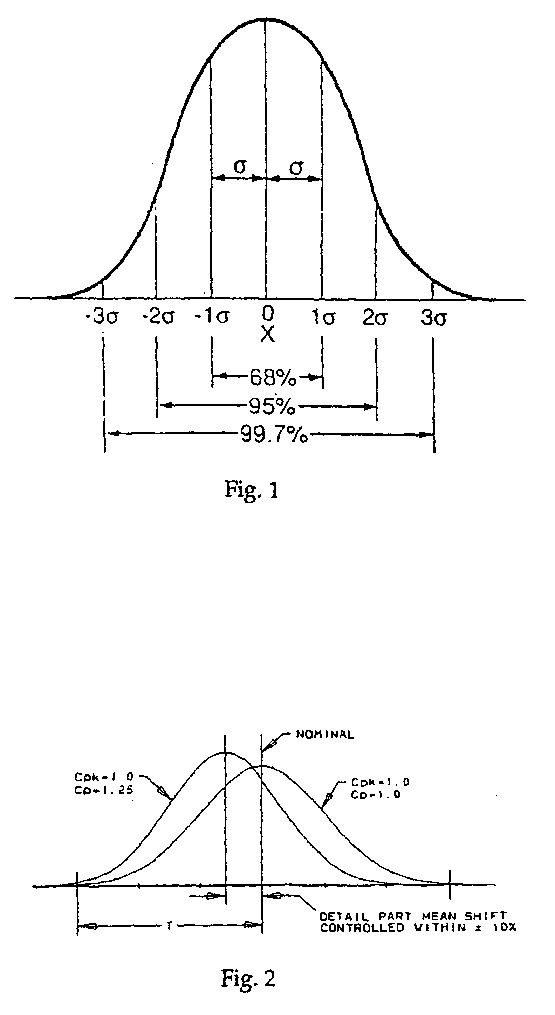

In the discrete case the population consists of many finite values and in the continuous case the population is so large that it is more conveniently represented by a continuum of values and the distribution of values is described by a density function f(x). If the population is normally distributed, part measurements will distribute and divide approximately in the proportions as shown in Figure 1.

It is often impractical or uneconomical to observe a very large population in its entirety. Instead, one obtains a random sample and, based on an examination of this random sample, one infers characteristics of interest about the full population. The purpose of most statistical investigations is to generalize from information contained in random samples characteristics of the population from which such samples are drawn. For example, in making inferences about the population parameters $\mu$ and $\sigma^2$ based on a random sample $X_1, ...,X_n$ one calculates the corresponding sample estimates, namely the sample mean

$$\overline{X} = \frac{X_1 + X_2 + ... + X_n}{n} = \frac{1}{n}\sum_{j=1}^{n} X_j$$

and the sample variance

$$S^2 = \frac{(X_1 - \overline{X})^2 + (X_2 - \overline{X})^2 + ... + (X_n - \overline{X})^2}{n-1} = \frac{1}{n-1}\sum_{j=1}^{n}(X_j - \overline{X})^2$$

Here the divisor n-1 in the definition of $S^2$ is motivated by a technical concern of unbiasedness in the estimator $S^2$. In large samples it matters little whether one divides by n or by n-1.

A basic assumption of the statistical tolerance analysis approach discussed herein is that features of the produced parts can be described with a normal distribution. The probability density function for a normal distribution is

$$f(x) = f_{\mu,\sigma}(x) = \frac{1}{\sqrt{2\pi}\sigma} e^{\frac{1}{2}[(x-\mu)/\sigma]^2}$$

The total area under the normal curve from $x = -\infty$ to $x = +\infty$ is equal to one; the area under f(x) between any two points a and b ($a \leq b$) is the proportion of part features between a and b.

Since the normal probability density function cannot be integrated in closed form between any pair of limits, probabilities or proportions of part features between such limits are usually obtained from tables of the standard normal distribution with mean $\mu=0$ and standard deviation $\sigma=1$. This is done by way of the following standardization:

If X represents a random element from a normal population with mean $\mu$ and standard deviation $\sigma$, then the population proportion of such elements falling within [a,b] is

$$P(a \leq X \leq b) = P\left(\frac{a-\mu}{\sigma} \leq \frac{X-\mu}{\sigma} \leq \frac{b-\mu}{\sigma}\right)$$

$$= P\left(\frac{a-\mu}{\sigma} \leq Z \leq \frac{b-\mu}{\sigma}\right)$$

$$= \Phi\left(\frac{a-\mu}{\sigma}\right) - \Phi\left(\frac{b-\mu}{\sigma}\right)$$

where $Z = (X-\mu)/\sigma$ is a random element from a standard normal distribution and $\Phi(z)$ denotes the tabulated area under the standard normal density to the left of Z, i.e.,

$$\Phi(z) = \int_{-\infty}^{z} \frac{1}{\sqrt{2\pi}} e^{-t^2/2} dt$$

with standard normal density

$$\varphi(z) = f_{0,1}(z) = \frac{1}{\sqrt{2\pi}} e^{-z^2/2}$$

The most common statistical analysis case that arises in design occurs when random elements from two or more populations are combined in some specified manner. Determinant assembly techniques are usually concerned with assembling parts whose tolerances stack linearly, i.e.,

$$X_{assy} = a_1 X_1 + a_2 X_2 + ... + a_n X_n$$

usually with coefficients $a_i = 1$ or $a_i = -1$, depending on the direction of action of the $i^{th}$ element in the tolerance chain. When random elements from two or more populations are combined in a linear fashion they form a new and derived population with mean and variance given by

$$\mu_{assy} = a_1 \mu_1 + a_2 \mu_2 + ... + a_n \mu_n$$

and

$$\sigma_{assy}^2 = a_1^2 \sigma_1^2 + a_2^2 \sigma_2^2 + ... + a_n^2 \sigma_n^2$$

$$= \sigma_1^2 + \sigma_2^2 + ... + \sigma_n^2$$

the latter simplification arising when $a_i^2 = 1$ for all i. The resultant standard deviation is the square root of $\sigma_{assy}^2$.

Typically, statistical tolerancing is based on several assumptions:

- Variations in part dimensions have a normal distribution.
- Production process is in statistical control (all variations occur at random.)
- Process spread is equal to plus or minus three standard deviations, $6\sigma$.

For a normally distributed population, 99.73% of the production parts will be within the process spread.

Statistical Process Control (SPC) provides standardized techniques to monitor manufacturing processes and verify process control and capability. To determine if the process is "capable," it is necessary to develop methods to calculate whether the variation is too large or if the process mean has shifted too far from nominal.

Once the detail part specification limits have been established and the natural variability of the process has been determined, the capability ratio, Cp, can be calculated as follows;

$$Cp = \frac{\text{specification width}}{\text{process width}} = \frac{USL - LSL}{6\sigma}$$

where USL and LSL are the upper and lower specification limits. The Cp capability ratio assumes that the measurements are normally distributed, but does not take into account the centering of data relative to the target value. It is simply the ratio of tolerance requirements to process capability.

The process capability index, Cpk, is a standard measure of process capability over an extended period of time for a process exhibiting statistical control. Cpk is considered to be a reliable indicator of process performance, taking into account process variation and deviation from nominal, $\frac{(USL+LSL)}{2}$.

Cpk can be calculated as follows;

$$Cpk = \text{minimum of } \frac{USL-\bar{X}}{3\sigma} \text{ and } \frac{LSL-\bar{X}}{3\sigma}$$

To determine whether a process is in statistical control, enough measurements are needed to allow all potential sources or variation to be represented. For any given period of time, a process characteristic will be considered in statistical control if all the plotted points in that period of time fall inside the control limits (+/- 3σ limits).

When the process is centered within the specification limits, then Cp = Cpk. The following table shows the percent process fallout for shifts in Cpk for various values of Cp. The table considers shifts in the process from the center of the specification limits. To reduce the number of defective detail parts, the process can be centered or the variability can be reduced, or both can be done.

| Percent Process Fallout For Shifts in Cpk from Various Values of Cp | | | |
|---|---|---|---|
| Cp | Shift in Cpk (Cp - Cpk) | | |
| | 0.00 | 0.20 | 0.40 |
| .50 | 13.361 | 20.193 | 38.556 |
| 1.00 | .270 | .836 | 3.594 |
| 1.20 | .0318 | .1363 | .8198 |
| 1.40 | .0027 | .0160 | .1350 |

Three approaches to tolerance analysis are available for use for determinant assembly:

1. Worst Case (Arithmetic)
2. Simulation Analysis
3. Modified Root Sum Square (RSS)

Selection of part datums and tolerance stack-up are the same for all methods. How we treat the part variation in the analysis is different for each approach.

The worst case analysis approach is well understood. It is simply the arithmetic sum of all tolerance contributors in an assembly stack-up. It is a conservative approach, requiring no knowledge about the individual detail part variation distribution since theoretically all parts could be made at either specification limit and the assembly will be within tolerance every time. This is the simplest analysis and most desirable from a fabrication standpoint since no knowledge is required about the part variation. If the calculated worst case tolerances are producible and predict a good assembly, these tolerances should be used.

A number of tolerance analysis software programs using statistical simulation techniques are available to predict the amount of variation that can occur in an assembly due to specified design tolerances, tool tolerances, and manufacturing/assembly variation. Some programs can determine the major contributing factors of the edicted variation and their percentage of contribution.

Simulation begins with a mathematical model of the assembly. Often data from a computer aided design program is an input to the model. The model includes detail geometry, tolerance variations (design and process) and the assembly sequence. The model simulates the production of a specified number of assemblies. During the simulations, the dimensions on each of the parts being assembled and on the assembly fixtures are randomly varied within the tolerances and statistical distributions specified. Output characteristics of interest are measured on the assemblies and the results are analyzed statistically.

The statistical analysis performed will give the percent of production assemblies that will be out of specification. The simulation can then be used to determine the major items contributing to the variation. Problem corrections can be identified and incorporated into the model. Additional simulations can be run to determine the effectiveness of the solution.

Three dimensional simulation programs require trained operators and dedicated equipment. Use is primarily limited to complicated structure or areas highly subject to change which is more difficult to analyze using the other more simplified approaches.

The RSS method of tolerance analysis is based on the assumption that tolerances stack linearly. Traditionally, the total tolerance band is set to 6σ of the detail process capability. Therefore, the tolerance band can be expressed in terms of the standard deviation.

$$\pm t_{detail} = \pm 3\sigma_{detail}$$

$$\pm\sigma_{detail} = \frac{\pm t_{detail}}{3}$$

In the previous discussion on normal distributions, it was noted that for a linear stack

$$X_{assy} = a_1 X_1 + a_2 X_2 + ... + a_n X_n$$

we have

$$\sigma_{assy} = \sqrt{a_1^2\sigma_1^2 + a_2^2\sigma_2^2 + ... + a_n^2\sigma_n^2}$$

Therefore

$$\frac{1}{3} T_{assy}^* = \sigma_{assy} = \sqrt{a_1^2(t_1/3)^2 + a_2^2(t_2/3)^2 + ... + a_n^2(t_n/3)^2}$$
$$= \frac{1}{3}\sqrt{a_1^2 t_1^2 + a_1^2 t_2^2 + ... + a_n^2 t_n^2}$$

and thus

$$T_{assy}^* = \sqrt{a_1^2 t_1^2 + a_2^2 t_2^2 + ... + a_n^2 t_n^2}$$

resulting in the well known root sum square (RSS) or statistical tolerance stacking formula.

Use of the RSS method of tolerance analysis has been observed to optimistically establish wider detail part tolerances and underestimate assembly variation. Thus, there has long been a need for a process for establishing valid detail part dimensional tolerance limits that will enable accurate prediction of an economically acceptable degree of non-conformance of a large flexible assembly made from said parts, especially in a process that accounts for detail part mean shifts of limited amounts in the process value of interest.

SUMMARY OF THE INVENTION

Accordingly, it is an object of this invention to provide an improved method for establishing valid detail part dimensional tolerance limits that will enable accurate prediction of an economically acceptable degree of dimensional or fit non-conformance of large flexible assemblies, such as airplane structure, made from such parts.

This object of the invention is attained in a method as defined in claim 1.

Preferred embodiments of the method of the present invention form the subject matter of dependent claims 2 to 7.

DESCRIPTION OF THE DRAWINGS

The invention and its many attendant objects and advantages will become better understood upon reading the following description of the preferred embodiment in conjunction with the following drawings, wherein:

Figure 1 is a graph showing the distribution of part measurements in a normally distributed population, and showing the proportions of the population within $\pm1\sigma$, $\pm2\sigma$, and $\pm3\sigma$;

Figure 2 is a graph showing a centered normal distribution and a distribution shifted by 10%, both with a Cpk = 1.0;

Figure 3 is a graph of two distributions of process values having a Cpk = 1.0 and showing the relationship of tolerance limits set by conventional, worst case tolerance analysis;

Figure 4 is a graph showing the allowed trade-off of mean shift for increased Cpk for production detail parts;

Figure 5 is a graph showing the trade-off between additional mean shift and increased Cpk for a family of curves illustrating various preselected mean shifts;

Figure 6 is a diagram of a tolerance evaluation method in accordance with this invention;

Figures 7 and 8 are diagrams illustrating tolerance zones calculated using the assembly analysis approach in accordance with this invention;

Figure 9 is an incorrect detail part drawing interpretation of a statistically derived bilateral tolerance requirement for determinant assemblies;

Figure 10A and 10B shows cross-sectional views of aligned and misaligned parts with temporary blind rivets installed;

Figures 11-13 are examples of drawings and drawing notes used to impose statistical data requirements when statistical tolerances in accordance with this invention are to be used;

Figure 14 is a graph showing the overlap of interfering feature distributions;

Figures 15-17 are illustrations of how to evaluate part feature measurements to the drawing requirements of Figures 11 through 13.

## DESCRIPTION OF THE PREFERRED EMBODIMENT

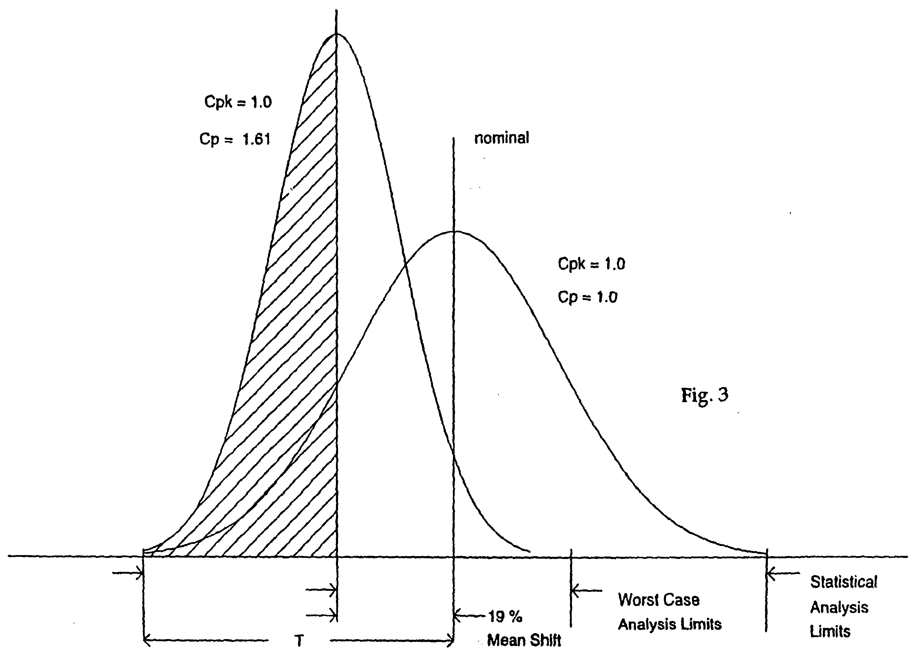

The unmodified prior art RSS method assumes that the process is centered on the nominal and that Cp = 1.0. However since it is difficult to achieve, the process means are not always centered as shown in Figure 2. Figure 3 illustrates two possible detail part distributions having a Cpk = 1.0. The specification limits were established using a traditional RSS analysis method for a seven part tolerance chain of equal tolerances. It can be seen that a distribution having a Cp = 1.61 with a Cpk = 1.0 could have half of its parts exceed the worst case analysis limits shown because of a large mean shift. Distributions having larger Cp's could result in even more parts exceeding the arithmetic worst case limits. Such mean shifts increase the assembly non-conformance risks since they shift the normal curve toward one end of the assembly design requirement. To effectively account for some amount of mean shift one can employ an inflation factor, namely

$$T_{assy}^{\Delta} = M(n)T_{assy}^{*} = M(n)\sqrt{a_1^2 t_1^2 + a_2^2 t_2^2 + ... + a_n^2 t_n^2}$$

Here the superscript $\Delta$ indicates "mean shift inflation." Such modification factors M(n) , with M(n) > 1, have been suggested in the past as a means of adjusting for centered but nonnormal distributions. Since such factors lead to tighter part tolerances, it has been suggested this will also have compensatory effects in dealing with mean shifts. However, this vague reasoning is not specific to mean shifts and in particular not to the amount of mean shift permitted. If detail part process capability and distribution mean shift data is known, a more accurate detail part tolerance requirement can be determined.

The modification factor M(n) will be derived below. The modified RSS approach is applicable for use in the analysis of assemblies made with the determinant assembly process.

The assumptions used for the assembly analysis are:

1. All tolerance contributors are modeled as normal distributions including;

- hole location
- material thickness
- fastener/hole clearances
- flange angularity

2. All tolerance contributors which relate to detail part datums will require that detail part mean shift be controlled within a preselected percentage of the total tolerance band.

3. Detail part tolerances will be based on the selection of preferred fabrication processes of known capabilities using standard SPC capability indices.

4. Tool tolerances are treated as worst case.

Although measurements of part features will not all follow a normal distribution perfectly, virtually all will be close enough for purposes of this discussion.

As discussed above, the RSS method usually assumes a process centered on nominal. However, detail part features will shift from the nominal value a small amount. It should be noted that drawing nominal dimensions should be shown at the center of the tolerance band for statistically toleranced features. The range of such shifts can be assumed to be proportional to the inherent part process variation. The current state of knowledge about process capability and the ability to center the process on nominal is incomplete and requires that assumptions be made from the fabrication capability data available. Based on current process capability knowledge, controlling mean shifts for position accuracy of coordination holes for determinant assembly within 10% of the specified tolerance band is considered to be an achievable goal and will be the preselected mean shift value for establishing predictions of assembly nonconformance made with said coordination holes. Other values for mean shift control could be selected based on known or expected fabrication capability.

The derivation of a modification factor M(n) can be motivated in two different ways, still using some form of RSS type of tolerance stacking. The first approach treats the mean shifts by arithmetic or worst case stacking of mean shifts, subject to a selected 10% limitation described above, and combining that with an RSS stacking of the allowed remaining variability. The second approach treats the mean shifts themselves as random and takes advantage of that by RSS stacking of mean shifts within a 10% limitation, and combining that arithmetically with an RSS stacking of the remaining variability.

In the first approach, the assembly mean shift is bounded in worst case fashion in terms of the part feature mean shifts. Denoting the mean and nominal of the $i^{th}$ part feature by $\mu_i$ and $\nu_i$, respectively, and by $\Delta_i = \mu_i - \nu_i$ the corresponding mean shift, the assembly mean shift is bounded by:

$$|\mu_{assy} - \nu_{assy}| = |a_1\Delta_1 + ... + a_n\Delta_n|$$

$$\leq |a_1||\Delta_1| + ... + |a_n||\Delta_n|$$

$$= \eta_1|a_1|t_1 + ... + \eta_n|a_n|t_n$$

Here $\eta_i = |\Delta_i|/t_i$ expresses the amount of mean shift as a proportion of the part tolerance $t_i$. The above requirement amounts to $\eta_i \leq 20$ for all parts, since $|\Delta_i|/(2t_i) \leq 10$ as required by 10% limitation. Given the absolute mean shift $|\Delta_i|$ and Cpk $\geq 1.0$, it follows that the part feature standard deviation can be at most

$$\sigma_i \leq \frac{t_i - |\Delta_i|}{3} = \frac{t_i - \eta_i t_i}{3} = \frac{t_i(1-\eta_i)}{3}$$

so the standard deviation of the assembly can be at most

$$\sigma_{assy} = \sqrt{a_1^2\sigma_1^2 + ... + a_n^2\sigma_n^2} \leq \sqrt{[a_1 t_1(1-\eta_1)/3]^2 + ... + [a_n t_n(1-\eta_n)/3]^2}.$$

Combining this upper bound on the RSS variability stack with the worst case mean shift stack $\eta_1|a_1|t_1 + ... + \eta_n|a_n|t_n$ in arithmetic or worst case fashion one obtains:

$$T_{1,assy} = 2782\sigma_{assy} + \eta_1|a_1|t_1 + ... + \eta_n|a_n|t_n$$

$$\leq 927\sqrt{[a_1 t_1(1-\eta_1)]^2 + ... + [a_n t_n(1-\eta_n)]^2} + \eta_1|a_1|t_1 + ... + \eta_n|a_n|t_n.$$

where $.927 = 2.782/3$.

Here the RSS variability stack is taken to be $2782\sigma_{assy}$ rather than $3\sigma_{assy}$, since only one tail of the normal distribution will contribute to the risk of non-conformance with the $\pm T_{1,assy}$ assembly tolerance. In traditional, centered RSS analysis this risk is set at .0027. The probability for a standard normal deviate to exceed 2.782 is .0027.

Subject to $\eta_i \leq \eta_0 = .20$, this bound on $T_{1,assy}$ becomes largest when $\eta_1 = ... = \eta_n = \eta_0$. Taking this upper bound as $T_{1,assy}$ results in the maximal (conservative) assembly tolerance

$$T_{1,assy} = \eta_0(|a_1|t_1 + ... + |a_n|t_n) + .927(1-\eta_0)\sqrt{a_1^2 t_1^2 + ... + a_n^2 t_n^2}$$

This assembly tolerance can further be bounded by the worst case situation of equal tolerance contributions $|a_1|t_1 = ... = |a_n|t_n$, namely

$$T_{1,assy} = \overset{.}{T}_{assy}\left(.927(1-\eta_0) + \eta_0 \frac{|a_1|t_1 + ... + |a_n|t_n}{\overset{.}{T}_{assy}}\right)$$

$$\leq \overset{.}{T}_{assy}\left(.927(1-\eta_0) + \eta_0 \sqrt{n}\right)$$

$$= M_1(n)\overset{.}{T}_{assy}$$

with

$$.927(1-\eta_0) + \eta_0 \frac{|a_1|t_1 + ... + |a_n|t_n}{\overset{.}{T}_{assy}} \leq 927(1-\eta_0) + \eta_0\sqrt{n} = M_1(n).$$

The second approach to mean shift stacking assumes that the various mean shifts occur randomly and thus offer themselves to RSS stacking with some resultant variation cancellation. If the mean shift randomness is of a one time nature, i.e. occurs only once for each part feature process, then the part feature mean shifts $\Delta_i = \mu_i - \nu_i$ can be viewed as random selections from the intervals $[-\eta_0 t_i, \eta_0 t_i]$. They can also be represented as

$$\Delta_i = \eta_0 t_i Y_i$$

where the $Y_i$ have a uniform distribution over the interval [-1,1]. Once these random shifts have been realized they limit, through the Cpk $\geq$ 1.0 requirement, the part feature variability, namely

$$\sigma_i(Y_i) \leq \frac{t_i - |\Delta_i|}{3} = \frac{t_i(1-|Y_i|\eta_0)}{3}$$

The assembly deviation from nominal can be written as

$$X_{assy} - \nu_{assy} = a_1(X_1 - \nu_1) + ... + a_n(X_n - \nu_n)$$

$$= a_1(X_1 - \mu_1) + ... + a_n(X_n - \mu_n) + a_1(\mu_1 - \nu_1) + ... + a_n(\mu_n - \nu_n)$$

Given fixed values of $Y = (Y_1,..., Y_n)$ determining the respective part feature mean shifts, one can view the assembly deviation $X_{assy} - \nu_{assy}$ as having an approximate normal distribution with mean

$$\mu_{assy}(Y) = a_1(\mu_1 - \nu_1) + ... + a_n(\mu_n - \nu_n)$$

$$= a_1\eta_0 t_1 Y_1 + ... + a_n\eta_0 t_n Y_n$$

and variance

$$\sigma^2_{assy}(Y) = a_1^2\sigma_1^2(Y_1) + ... + a_n^2\sigma_n^2(Y_n)$$

$$\leq a_1^2 \frac{t_1^2(1-|Y_1|\eta_0)^2}{3^2} + ... + a_n^2 \frac{t_n^2(1-|Y_n|\eta_0)^2}{3^2}$$

Note that both mean and variance of $X_{assy} - \nu_{assy}$ depend, through Y, crucially on the mean shift realizations. For fixed Y, one can expect that 99.73% of all values of $X_{assy} - \nu_{assy}$ fall within

$$\mu_{assy}(Y) \pm 3\sigma_{assy}(Y)$$

This interval will move around as the values of Y change. These values of Y, governing the mean shifts, are realized just once for each set of part processes feeding into a particular type of assembly. It is possible to contain the above interval within a larger interval [A,B] for almost all realizations of Y, i.e., with high probability, here taken to be .9973, one has

$$P([\mu_{assy}(Y)-3\sigma_{assy}(Y),\mu_{assy}(Y)+3\sigma_{assy}(Y)] \text{ contained in } [A,B]) = .9973.$$

Actual values for A and B can be computed as shown below. This is in contrast with actual values for $[\mu_{assy}(Y)-3\sigma_{assy}(Y),\mu_{assy}(Y)+3\sigma_{assy}(Y)]$ which are not known, since the actual realized mean shifts and thus the $Y_i$ are not known a priori at the design stage. It is this interval [A,B] that will be used as the assembly tolerance interval within which at least 99.73% of all assembly deviations $X_{assy} - \nu_{assy}$ are expected to fall.

After all the part process mean shifts have been realized, it is of interest to consider what proportion of the resulting assemblies will fall outside [A,B]. The interval

$$I(Y) = [\mu_{assy}(Y)-3\sigma_{assy}(Y),\mu_{assy}(Y)+3\sigma_{assy}(Y)]$$

captures 99.73% of the normal density positioned over its center. As this interval with its normal density slides back and forth within [A,B], the area under the density outside of [A,B] is largest when the interval I(Y) abuts either A or B, in which case only one side of this density will significantly contribute to the probability of falling outside of [A,B]. This probability is thus only half, namely $\approx$ .00135, of the originally intended .0027. To correct for this, one takes instead

$$I(Y) = [\mu_{assy}(Y)-2.782\sigma_{assy}(Y),\mu_{assy}(Y)+2.782\sigma_{assy}(Y)]$$

i.e., take the factor 2.782 instead of the factor 3 in defining I(Y), since $P(Z > 2.782) = 1 - \Phi(2.782) = .0027$). This then results in at most .27% of assemblies falling outside the tolerance interval [A,B]. The qualifier "at most" results from the ignorance of where within [A,B] the interval I(Y) is positioned.

It remains to find the larger bracketing interval [A,B]. It will allow for the chance variations in Y while trying to bracket I(Y). The interval I(Y) can either bound out of [A,B] at the high end, i.e., $\mu_{assy}(Y)+2.782\sigma_{assy}(Y) > B$ or at the low end, i.e., $\mu_{assy}(Y)-2.782\sigma_{assy}(Y) < A$. By taking either of those risks to be .00135, the chance that one interval endpoint of I(Y) falls outside of [A,B] is .00135 + .00135 = .0027. Thus the probability of containment will be its complement, namely the desired .9973.

Instead of bounding $\mu_{assy}(Y)+2.782\sigma_{assy}(Y)$ from above by B with probability .99865 = 1 - .00135 , it is more useful to bound that interval endpoint divided by

$$T_{assy}^* = \sqrt{a_1^2 t_1^2 + ... + a_n^2 t_n^2} ,$$

i.e.,

$$\frac{\mu_{assy}(Y)+2.782\sigma_{assy}(Y)}{T_{assy}^*}$$

$$\leq \eta_0[w_1 Y_1 + ... + w_n Y_n] + \frac{2782}{3}\sqrt{w_1^2(1-|Y_1|\eta_0)^2 + ... + w_n^2(1-|Y_n|\eta_0)^2} = B(Y)$$

with $w_i = a_i t_i / T^*_{assy}$. The randomness of Y entails that this upper bound B(Y) has an approximate normal distribution. This approximation is quite good for $n \geq 5$ and for $2 \leq n \leq 4$ it leads to conservative assembly tolerance bounds. Furthermore, it turns out that the case of equal tolerance contributions, i.e., $|a_1|t_1 = ... = |a_n|t_n$ or $w_1 = ... = w_n = 1/\sqrt{n}$, yields the most conservative assembly tolerance bounds. Assuming this latter case, the above mentioned normal distribution for the upper bound B(Y) has mean

$$\mu_F = \frac{2.782}{3}\sqrt{1-\eta_0+\eta_0^2/3} = .927\sqrt{1-\eta_0+\eta_0^2/3} = .83632 \text{ for } \eta_0 = .2$$

and standard deviation

$$\sigma_F = \frac{\eta_0}{\sqrt{3}} = .1155 \text{ for } \eta_0 = .2$$

Thus

$$P(B(Y) \leq \mu_F + 3\sigma_F) = \Phi(3) = .99865 .$$

Taking $B_F = \mu_F + 3\sigma_F$ ($B_F = 1.183$ for $\eta_0 = .2$) and $B = B_F T^*_{assy}$ one has

$$\mu_{assy}(Y)+2.782\sigma_{assy}(Y) \leq B = B_F T^*_{assy},$$

for 99.865% of all Y or mean shift contingencies. Hence

$$\mu_{assy}(Y) + 2.782\sigma_{assy}(Y) > B \qquad (B = 1.183 T^*_{assy} \text{ when } \eta_0 = .2)$$

with probability .00135.
Similarly,

$$\frac{\mu_{assy}(Y)-2.782\sigma_{assy}(Y)}{T^*_{assy}}$$

$$\geq \eta_0[w_1 Y_1 +...+ w_n Yn] - \frac{2.782}{3}\sqrt{w_1^2(1-|Y_1|\eta_0)^2 +...+ w_n^2(1-|Y_n|\eta_0)^2} = A(Y)$$

where A(Y) is approximately normal with mean $-\mu_F$ and standard deviation $\sigma_F$. This leads to

$$P(A(Y) \geq -\mu_F - 3\sigma_F) = 1-\Phi(-3) = \Phi(3) = .99865 .$$

Taking $A_F = -B_F$ and $A = A_F T^*_{assy} = -B$ one has

$$\mu_{assy}(Y)-2.782\sigma_{assy}(Y) \geq A = A_F T^*_{assy},$$

for 99.865% for all Y or mean shift contingencies. Hence

$$\mu_{assy}(Y)-2.782\sigma_{assy}(Y) < A \qquad ( A = -1.183 T^*_{assy} \text{ when } \eta_0 = .2)$$

with probability .00135. Thus I(Y) bounds outside of [A,B] with probability .00135 + .00135 = .0027 and is contained in [A,B] for the complementary 99.73% of all mean shift contingencies.
Since -A=B, the bracketing interval [A,B] is centered on zero. To emphasize the tolerance context and the different nature from the arithmetic stacking of mean shifts in $T_{1,assy}$, this common value of B and -A is also denoted by $T_{2,assy}$.

Thus the assembly tolerance, after allowing for the one-time mean shift variation through statistical stacking and allowing for the remaining and recurring part feature variation also through statistical stacking, is bounded by

$$|X_{assy} - v_{assy}| \leq T_{2,assy} = M_2(n)T^*_{assy}$$

with

$$M_2(n) = B_F = .927\sqrt{1-\eta_0 + \eta_0^2/3} + \eta_0\sqrt{3}( = 1.183 \text{ for } \eta_0 = .2).$$

Note that $M_2(n)$, in contrast to $M_1(n)$, does not depend on n. This is due to the statistical stacking of mean shifts.

Until such time that actual process data is available to validate the statistical properties of the hole location mean shifts, it is considered reasonable to assume that the actual factor is somewhere in between the two approaches.

As a compromise of the two approaches one can take as modification factor the average of $M_1(n)$ and $M_2(n)$:

$$M(n) = \frac{M_1(n)+M_2(n)}{2} = \frac{(.927)(.8)+.2\sqrt{n} + 1.183}{2} = \frac{1.925+.2\sqrt{n}}{2}$$

The table below gives the values of $M_1(n)$, $M_2(n)$, and the average factor $M(n)$ for various values of n.

| RSS Modification Factor | | | | | | | |
|---|---|---|---|---|---|---|---|
| n | 2 | 3 | 4 | 5 | 6 | 7 | 8 |
| $M_1(n)$ | 1.024 | 1.088 | 1.142 | 1.189 | 1.231 | 1.271 | 1.307 |
| $M_2(n)$ | 1.183 | 1.183 | 1.183 | 1.183 | 1.183 | 1.183 | 1.183 |
| $M(n)$ | 1.104 | 1.136 | 1.162 | 1.186 | 1.207 | 1.227 | 1.245 |

During the part tolerance analysis development, it was found that the number of significant tolerances in a typical aircraft fuselage stackup is approximately eight. An RSS modifier of $M(n) = 1.25$ will work for most analysis as a simplified and conservative approach for tolerance stackups of up to eight significant contributors. However, the use of factors from the above table or formula is acceptable if required to validate the assembly sequence/manufacturing plan.

It can be seen from the above discussion that a preselected mean shift value other than 10% could be used to develop a different RSS modification factor which is within the scope of this invention. In most applications, a 20% preselected mean shift value would be considered a practical limit as greater mean shifts will tend to approach worst case tolerance limits eliminating the benefit of wider detail tolerances derived with statistical tolerancing.

Since preferred detail part fabrication processes may be found which exceed the preselected mean shift limit, it is desirable to provide a process for part acceptance which will not increase assembly risk for assemblies as toleranced to the initial mean shift limit.

Increased mean shifts adversely affect the worst case aspect of tolerance stacking. It can be shown that, up to a point, reduced part variability (increased Cpk) may act as an acceptable trade-off for increases in detail part mean shifts above the preselected value of 10%. Once assembly specification limits have been established, the initial mean shift limit has been selected, and the detail tolerances have been allocated by the above procedure, there is available a method for trading off Cpk's and increased mean shifts. In order for such tradeoffs to be possible independently from detail part to detail part or from vendor to vendor, this procedure assumes the worst case scenario, namely that all detail part mean shifts could have increased to the same percentage (higher than 10%) and have been compensated by an appropriate increase to a common Cpk > 1.0. This trade-off relationship is developed below.

Denote by $\eta^*$ the new maximal mean shift fraction as observed for the $i^{th}$ detail part process, i.e., $|\mu_i - v_i| \leq \eta^*t_i = (\eta^*/2)2t_i$. Correspondingly denote by $Cpk^*$, the Cpk value which is required to compensate for the new maximal mean shift in the $i^{th}$ detail part process. In the original development of the tolerancing method it was assumed at Cpk > 1.0 for all detail part processes. Now it is hoped that a value of $Cpk_i$ much larger than one will sufficiently offset an increase of $\eta^*$ over the preferred value $\eta_0 = .2$ (or 10% mean shift). Following closely the development of the original $M(n)$ factors and maintaining the same notation note that

$$Cpk_i = \frac{t_i(1-\eta_i)}{3\sigma_i} \geq Cpk^* \Rightarrow \sigma_i \leq \frac{t_i(1-\eta_i)}{3Cpk^*}$$

so that a larger value of $Cpk^*$ means less variability, i.e., a smaller $\sigma_i$. From this obtain an assembly $\sigma$:

$$\sigma_{assy} = \sqrt{a_1^2\sigma_1^2 + ... + a_n^2\sigma_n^2}$$
$$\leq \sqrt{\left[a_1 t_1(1-\eta_1)/(3Cpk^*)\right]^2 + ... + \left[a_n t_n(1-\eta_n)/(3Cpk^*)\right]^2}$$

Stacking $2.782\sigma_{assy}$ in worst case fashion with the worst case stack of mean shifts $\eta_1|a_1|t_1 + ... + \eta_n|a_n|t_n$ results in

$$T^*_{1,assy} = 2.782\sigma_{assy} + \eta_1|a_1|t_1 + ... + \eta_n|a_n|t_n$$
$$= .927\sqrt{[a_1 t_1(1-\eta_1)]^2 + ... + [a_n t_n(1-\eta_n)]^2} + \eta_1|a_1|t_1 + ... + \eta_n|a_n|t_n$$

which, subject to $\eta_i \leq \eta^*$, becomes largest when $\eta_1 = ... = \eta_n = \eta^*$. As before, this is then reduced to

$$T^*_{1,assy} \leq M^*_1(n)T^*_{assy}$$

with

$$M^*_1(n) = \frac{.927(1-\eta^*)}{CpK^*} + \eta^*\sqrt{n} \text{ and } T^*_{assy} = \sqrt{a_1^2 t_1^2 + ... + a_n^2 t_n^2},$$

assuming the worst case of equal tolerance contributors, i.e. $|a_1|t_1 = ... = |a_n|t_n$.

The other approach to dealing with mean shifts took advantage of statistical tolerancing for the mean shifts as well, i.e., treat the mean shift $\Delta_i$ as random, $\Delta_i = \eta^* t_i Y_i$, where the random variable $Y_i$ is assumed to be uniformly distributed over the interval [-1,1]. Following the previous development, but incorporating the more stringent Cpk requirement, one arrives at

$$T^*_{2,assy} = M^*_2(n)T^*_{assy}$$

with

$$M^*_2(n) = \frac{.927}{Cpk^*}\sqrt{1-\eta^* + \eta^{*2}/3} + \sqrt{3\eta^*}.$$

Corresponding to the previous compromise between these two approaches one takes the average of these two inflation factors

$$M^*(n) = \frac{M^*_1(n) + M^*_2(n)}{2}$$
$$= \frac{.927}{Cpk^*} \frac{1-\eta^* + \sqrt{1-\eta^* + \eta^{*2}/3}}{2} + \eta^* \frac{\sqrt{n} + \sqrt{3}}{2}.$$

In order for the assembly risk to stay at the same level obtained when using $M(n)T^*_{assy}$ as assembly tolerance stack

one should match

$$M(n)T^*_{assy} = M^*(n)T^*_{assy} \text{ or } M(n) = M^*(n)$$

or for $\eta_0 = .2$

$$.927\frac{1-\eta_0 + \sqrt{1-\eta_0 + \eta_0^2/3}}{2} + \eta_0\frac{\sqrt{n} + \sqrt{3}}{2} = .962+.1\sqrt{n}$$

$$= \frac{.927}{Cpk^*}\frac{1-\eta^* + \sqrt{1-\eta^* +\eta^{*2}/3}}{2} + \eta^*\frac{\sqrt{n} + \sqrt{3}}{2}$$

which leads to the following trade-off relationship between Cpk* and η* :

$$Cpk^* = \frac{.927(1-\eta^* + \sqrt{1-\eta^* +\eta^{*2}/3})}{1.924+.2\sqrt{n}-\eta^*(\sqrt{n} + \sqrt{3})}.$$

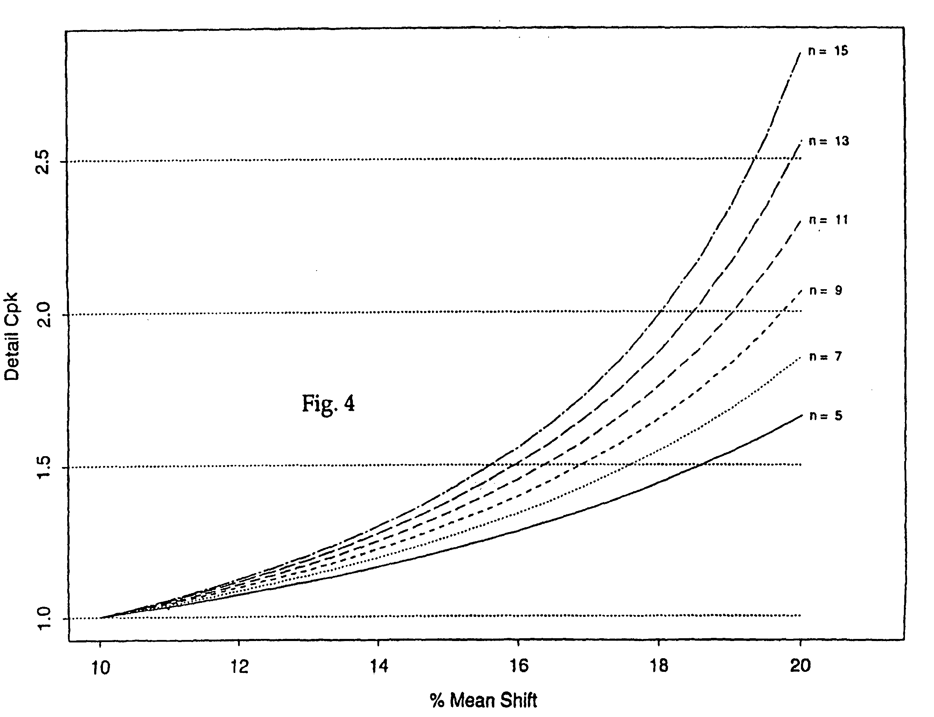

Figure 4 illustrates the trade-off relationship for various numbers n of detail parts in the assembly. For general initial values of $\eta_0$ , the trade-off relationship is

$$Cpk^* = \frac{.927(1-\eta^* + \sqrt{1-\eta^* + \eta^{*2}/3})}{.927(1-\eta_0 + \sqrt{1-\eta_0 + \eta_0^2/3}) + (\eta_0-\eta^*)(\sqrt{n} + \sqrt{3})}$$

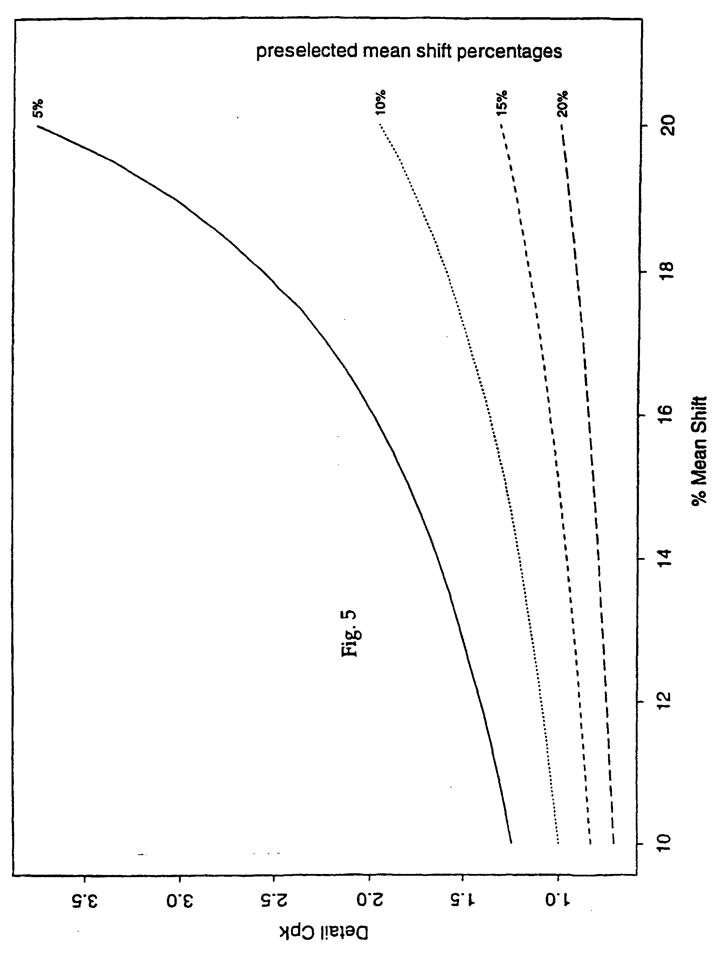

Figure 5 illustrates this latter trade-off relationship for an assembly of n = 8 parts for various preselected mean shift values $\eta_0$ .

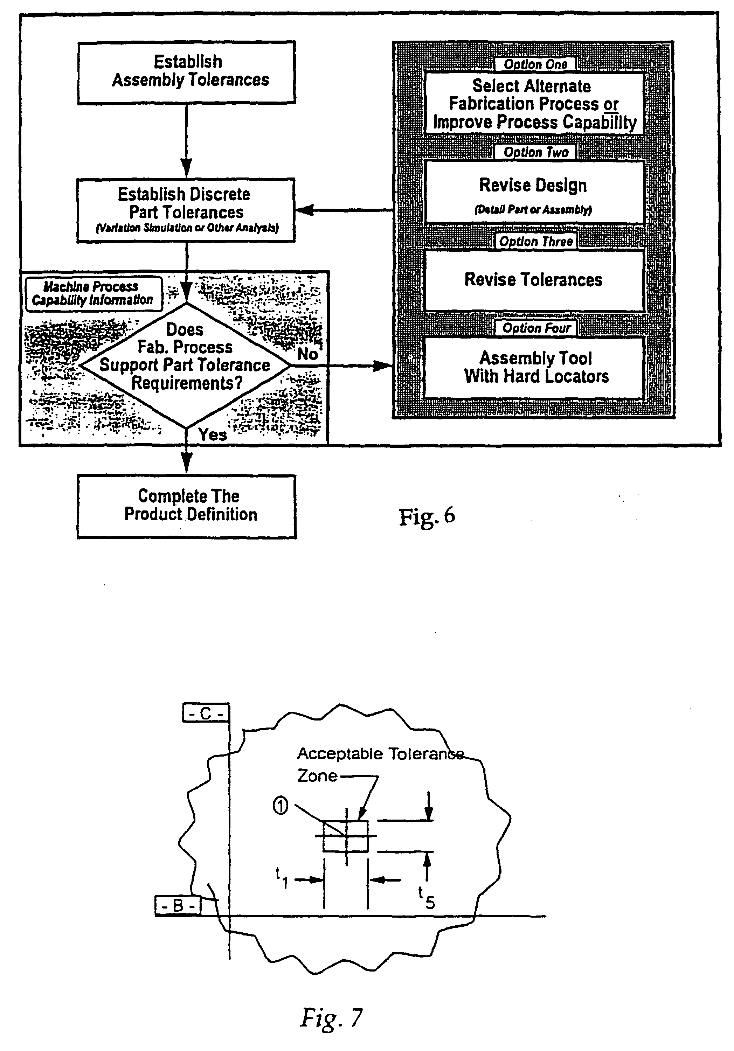

Establishing valid end item tolerances required to meet functional assembly requirements is the first step in a tolerance evaluation process in accordance with this invention as illustrated in Figure 6. When a traditional design approach showing installations on stable mylar drawings has been employed, most features on commercial transport airplanes were then defined within ±.03 of each other, and tooling was built to satisfy these requirements. This method of assigning tolerances has been adequate in the past for manufacture of flexible structures like airplanes by using rigid tooling to locate the parts relative to each other and establish the configuration of the assemblies. However, using determinant assembly as the manufacturing technique, tooling is greatly simplified or eliminated. Therefore, it is necessary to establish tolerances at assembly interfaces before detail part allocation can be evaluated since tools are no longer used to locate each detail part.

Using the new techniques of determinant assembly, the structure is assembled, without tools, by positioning detail parts, flexing where necessary within the preload limits for the parts in question, until the desired relationship between the coordination features is achieved, for example, alignment of coordination holes in the two detail parts. Therefore in order to determine an acceptable assembly tolerance, part flexibility and residual stresses due to pull-down must be considered in the analysis. In some highly loaded or fatigue prone details, little or no pull-down may be allowed. Therefore, the required tolerance for acceptable assembly must account for but not be limited to the following factors:

- Desired Relation Between Coordination Features
- Geometric Fit Criteria As Established By Performance Or Appearance Requirements
- Minimum/Maximum Clearance
- Pull-Down/Shimming Requirements

Specific detail part processes must be determined to accurately predict assembly variation. The single most reliable and economical process for manufacturing a part family will define the preferred processes for part fabrication. The selected process must be "capable". Fabrication capability includes a quantitative understanding of the effects that process variables have on finished parts. Process variables include room and machine temperature, machine stiffness and periodic maintenance, material variation, feed and cutter speeds, cutting fluid condition, cutter sharpness, etc.

Detail part datum selection is required prior to performing a determinant assembly tolerance analysis. Proper selection requires knowledge of both the assembly end item requirements and the manufacturing plan for fabricating the detail parts. The assembly analysis requires that the actual part features used in fabrication be identified prior to allocating the assembly tolerance budget to each of the detail parts. Based on this analysis, both design and tooling must be in agreement with the selected datums in order to accurately represent detail part variation.

A modified RSS analysis evaluates variation separately for each axis in an X, Y, Z coordinate system. To establish an assembly tolerance path, it is necessary to clearly show the reference X, Y, Z coordinate system used for the analysis. A tolerance value has no meaning without a reference system.

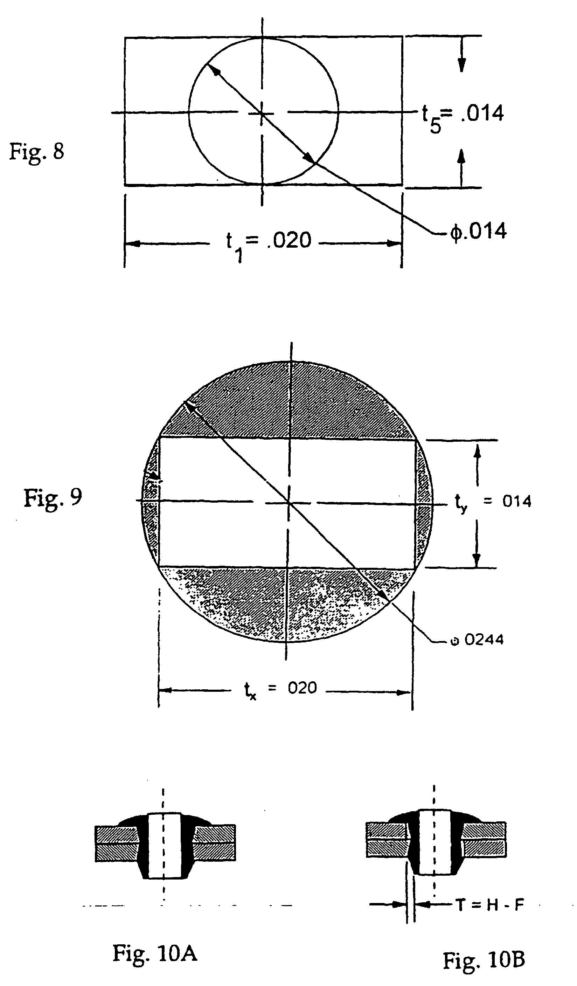

A coordination hole often must satisfy different tolerance requirements in two directions even though each requirement is analyzed independently. After the most restrictive statistical tolerance is determined, the drawing tolerance requirement is interpreted as shown in Figures 7 and 8.

This method is different from the typical rule of thumb used in geometric dimensioning and tolerancing (GD&T) where the total coordinate tolerance zone is multiplied by a 1.4 factor to convert a square tolerance zone to a circular true position tolerance zone. The GD&T conversion is intended to allow additional fabrication tolerance for hole location when fastener interchangeability is the design driver. The design driver for the determinant assembly approach is typically not fastener interchangeability but part position which is controlled through hole to hole pinning. For example,

$$t_x = \pm 010$$

$$t_y = \pm 007$$

If the tolerances were treated as a rectangular tolerance zone, a total true position tolerance zone diameter of .0244 would result. A typical GD&T interpretation as shown in Figure 9 results in an incorrect drawing interpretation. If the drawing callout is shown as $\phi$.0244, all of the cross hatched area would be considered acceptable per the detail drawing requirements. However, every part that fell in the cross hatched area would be outside the calculated statistical tolerance analysis range and would increase the number of out of tolerance assemblies. In some cases, fabrication capability may be better in one axis than another. If the tolerance analysis results allow, a rectangular tolerance zone may be shown on the drawing and eliminates the possible misinterpretation resulting from use of standard GD&T nomenclature.

Since assembly tolerances in determinant assembly can be strongly influenced by the fastener, it is necessary to know the planned assembly fastener type. It is also necessary to understand something about how the fastener fills the coordination hole in order to specify how much clearance to include in the tolerance path.

Cleco and Wedgelock type temporary fasteners provide very little self centering of coordination holes. In addition, any radial alignment would only occur in the direction normal to the "bow" of the fastener.

Blind rivets with pull-through mandrels will be used as temporary fasteners in many determinant assembly applications. The open hole in the center of the fastener is used for optical alignment to drill out the temporary fastener when the final fastener is installed.

When a blind rivet is installed, the mandrel expands the shank of the fastener. With light or flexible parts and when expansion of the shank aligns the holes no clearance need be accounted for in the tolerance analysis. As part weight or stiffness increases, the self-centering affect of small blind rivets will be overcome and self-centering will not occur. This is shown in Figures 10A and 10B.

The particular hole filling ability of the fastener must be considered in establishing the hole clearance to be added in tolerance path. For example if a selected fastener expands to $\phi$.136 minimum during installation into a $\phi$.1406-.1436 hole, then a reasonable assembly tolerance analysis will consider

$$H_{average} = \frac{.1406 + .1436}{2}$$

$$= .1421$$

$$T_{blind\ rivet} = .1421 - .136$$

$$= \underline{\underline{.0061}}$$

And this tolerance would be applied to the analysis as:

$$T_{assy} = M(n)\sqrt{t_1^2 + t_2^2 + (.0061)^2 + ...}$$

As noted, it is often necessary to rely on temporary fastener expansion to provide required assembly accuracy. This expansion aligns the holes regardless of the hole size. Using the traditional GD&T approach, the drawing tolerance would be shown with a maximum material condition modifier (MMC) on the hole. However, with expanding fasteners this will degrade the assembly accuracy. In addition, use of the MMC modifier complicates statistical data evaluation during part acceptance. Therefore, drawing callout of statistically derived tolerances will be shown with a regardless of feature size (RFS) modifier as shown below.

$$\boxed{\oplus \;\, \phi.014 \;\, \text{\textcircled{S}} \;\, | A | B | C |}$$

Assemblies of parts using both determinant assembly and tools must account for the tools in the tolerance analysis. To minimize additional tolerances due to the tool, the tool interface should be indexed to a determinant assembly feature on the detail part. Since there are typically a small number of tools, the tool tolerances cannot be modeled with a normal distribution. The tool tolerances must be allocated in the analysis as worst case. This is accomplished by pulling the tool tolerance out of root sum square (RSS) as shown below.

$$T_{assy} = T_{tool,1} + ... + T_{tool,k} + M(n)\sqrt{\sum_{i=1}^{n} t_i^2}$$

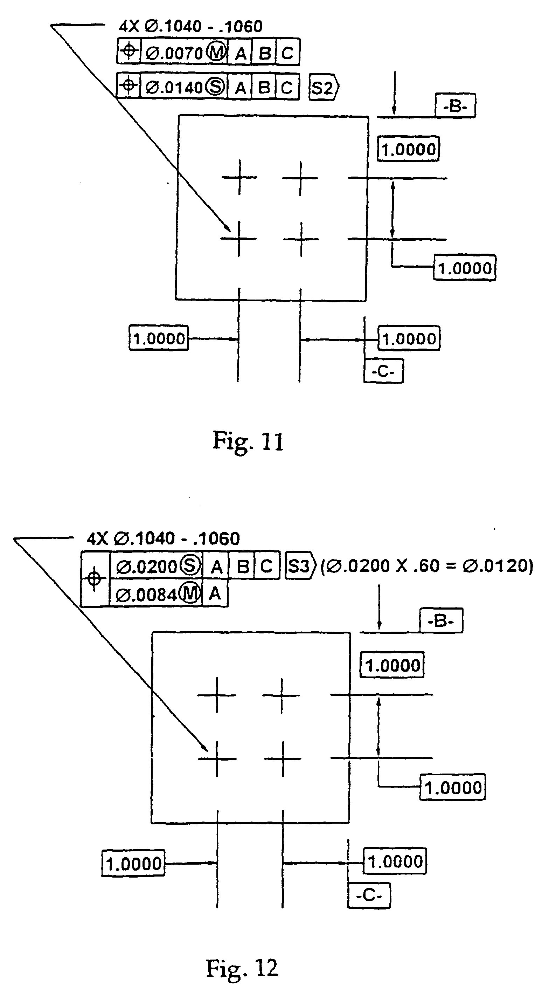

When using the modified RSS analysis approach to evaluate assembly tolerances, some of the tolerance path contributors may be part features which are toleranced without a need for mean shift control but which still benefit from a statistical tolerance treatment. A pattern of holes within a large aircraft skin panel is an example of this type of part. These skin panels control part to part relationships for mating parts but typically will not require control of mean shift to the part datum reference system. Control of the hole position distribution is the primary design goal. It is, therefore, necessary to recognize these tolerance path contributors and to treat them appropriately in the analysis. The analysis approach as presented includes a modification factor, M(n), which is applied to all contributors in the root sum square. Recall that M(n) resulted from a compromise of averaging worst case mean shift stacking and statistical mean shift stacking. For the sake of this exposition it is assumed that the first two tolerance contributors, $t_1$ and $t_2$, are not affected by mean shifts, whereas mean shifts do ptay a role for the remaining n-2 contributors, $t_3$, ... , $t_n$. Tolerances such as $t_1$ and $t_2$ will be specified on the detail part drawings as shown in Figures 11-13.

What is presented below is easily modified for other mean shifts or no mean shift contingencies. Following the previously given derivation of worst case mean shift stacking one arrives at

$$T_{1,assy} = \eta_0(|a_3|t_3 + ... + |a_n|t_n) + .927(1 - \eta_0)\sqrt{a_1^2 t_1^2 + ... + a_n^2 t_n^2}$$

$$\leq \left[.927(1 - \eta_0) + \eta_0\sqrt{n-2}\right]\sqrt{a_1^2 t_1^2 + ... + a_n^2 t_n^2} = \tilde{M}_1(n)T_{assy}^{\cdot} \;.$$

Taking this upper bound as the final form of $T_{1,\,assy}$, the effect of the two zero mean shift contributions is the $\sqrt{n-2}$ in $\tilde{M}_1$ (n) =.927(1-$\eta_0$)+$\eta_0\sqrt{n-2}$ in place of the $\sqrt{n}$ in

$$M_1(n) = .927(1-\eta_0) + \eta_0\sqrt{n}.$$

Following a similar rederivation in the case of statistical stacking of mean shifts, one obtains

$$T_{2,assy} = \left( .927\sqrt{1 - \tilde{R} + \tilde{R}(1 - \eta_0 + \eta_0^2/3)} + \eta_0\sqrt{3\tilde{R}} \right)$$
$$\times \sqrt{(1 - \eta_0)^2(a_1^2 t_1^2 + a_2^2 t_2^2) + a_3^2 t_3^2 + \ldots + a_n^2 t_n^2}\,.$$

Here

$$\tilde{R} = \tilde{w}_3^2 + \ldots + \tilde{w}_n^2 \quad \text{with} \quad \tilde{w}_i^2 = \frac{a_i^2 t_i^2}{(1 - \eta_0)^2(a_1^2 t_1^2 + a_2^2 t_2^2) + a_3^2 t_3^2 + \ldots + a_n^2 t_n^2}$$

for $i = 3,\ldots, n$ .

Here and in the previous derivation it is understood that all tolerances $t_i$, $i = 1, 2,\ldots,n$, represent $3\sigma_i$ detail part process variation inflated by the factor $1/(1-\eta_0)$, i.e., $t_i = 3\sigma_i/(1-\eta_0)$ .

Since the root sum square terms in these two approaches are not identical, it is not just a matter of averaging the multipliers in order to arrive at a compromise approach. Instead one takes as compromise the average of the two types of assembly tolerances, namely

$$T_{assy} = \frac{T_{1,assy} + T_{2,assy}}{2}$$

This treatment of tolerance contributors without mean shift effect is somewhat involved. The following simpler stacking formula, based mainly on-heuristics and the modified RSS method and again presented for the case of $k = 2$ tolerance terms without mean shift effect, may be used as a reasonable approximation (within 10% of $T_{assy}$)

$$\tilde{T}_{assy} = M(n-2)\sqrt{\frac{(t_1^2 + t_2^2)(1 - \eta_0)^2}{M(n-2)^2} + t_3^2 + \ldots}$$

where

$$M(n) = \frac{.927(1-\eta_0) + \eta_0\sqrt{n} + .927\sqrt{1-\eta_0 + \eta_0^2/3} + \eta_0\sqrt{3}}{2}$$

The $M(n-2)$ in the denominator under the square root in $\tilde{T}_{assy}$ is to cancel the effect of the inflation factor in front of the square root. The factor $(1-\eta_0)^2$ in that same square root reduces the tolerances $t_1$ and $t_2$, which are assumed to have been inflated a priori by $1/(1-\eta_0)$ to allow for mean shifts.

The assembly tolerance calculated from an RSS analysis results in a prediction that .27% of the assemblies will exceed the calculated tolerance limits. There are some cases where the tolerances of the planned assembly cannot be allocated by the RSS method but the plan may still be considered acceptable if the predicted assembly non-conformance is still considered low for the agreed detail part tolerances made with known fabrication capability.

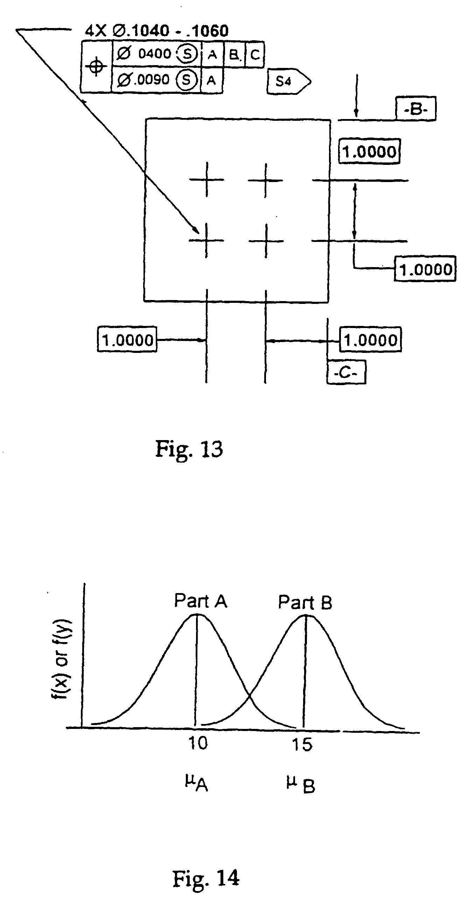

For parts or assemblies which may interfere, we are interested in the probability of interference. This occurs when the dimension of part A (or assembly) is greater than the dimension of part B (or assembly B). This is shown in Figure 14.

The probability of A - B > 0 (non-interference) is computed as $\Phi(Z)$, with $\Phi$ the standard normal distribution function defined above and:

$$Z = \frac{\mu_A - \mu_B}{\frac{1}{3}\sqrt{t_A^2 + t_B^2}}$$

It is often the case that the actual means $\mu_A$ and $\mu_B$ will differ from the nominal drawing values $\nu_A$ and $\nu_B$. One can make various assumptions on how such mean shifts come about and how they may be controlled. The simplified method shown below will provide conservative probability predictions of interference for up to .27% non-conformance. Namely, compute the non-interference probability as $\Phi(Z)$ with

$$Z = \frac{\nu_A - \nu_B}{\frac{M(n)}{3}\sqrt{t_A^2 + t_B^2}}$$

A more involved treatment will provide an improved prediction accuracy for interference as the non-conformance exceeds .27%.

Interchangeability of installing fasteners in mating parts can be 100% assured with the GD&T approach to tolerancing of:

$$T = H\text{-}F$$

where:  T = Tolerance
  H = MMC Hole
  F = MMC Fastener

Statistical predictions of fastener installation can often be analyzed using the modified RSS approach. Multiple part tolerance chains resulting from flexible assemblies can often be simplified for analysis into a linear tolerance path by ignoring the hole position error in the flexible direction. Errors in this direction will not contribute to the problem of fastener installation which is considered to be equally significant in a GD&T tolerance analysis. This problem is encountered often in aircraft structural sub-assemblies which remain flexible in two directions until fasteners are installed during final assembly.

Once valid assembly tolerances are established and economically acceptable detail part process capabilities (with Cpk $\geq$ 1.0) are determined, an analysis is performed to allocate moieties of the assembly tolerances among the detail parts in the assembly. This analysis considers the assembly effect from allowing the detail part means to shift from the nominal dimensions within the preestablished limits. The following equation is used on an iterative basis to establish discrete part tolerances as shown in Figure 6.

$$T_{assy,required} \geq T_{assy} = M(n)\sqrt{t_1^2 + t_2^2 + ... + t_n^2}$$

where

$$M(n) = \frac{.927(1-\eta_0)+\eta_0\sqrt{n}+.927\sqrt{1-\eta_0 + \eta_0^2/3} + \eta_0\sqrt{3}}{2}$$

and $t_i \geq$ process capability limits of the planned detail part process having a Cpk equal to at least 1.0 .

If the assembly analysis indicates that 100% of the assemblies will conform to the tolerance requirements with economical arithmetic tolerances applied to the detail parts, a traditional arithmetic drawing tolerance is specified in accord with applicable industry standards such as ANSI-Y14.5. If these detail part tolerances are more restrictive than desired but are still producible, it may be desirable to specify both a traditional detail part tolerance and a statistical tolerance.

Drawing presentations for detail parts which meet assembly requirements with either a traditional arithmetic part tolerance or a more relaxed statistical tolerance will be similar to the drawing sample shown in Figure 11. A note similar to the following should be applied to the parts list.

  Features identified as statistically toleranced shall be produced with statistical process controls, or to the more restrictive arithmetic tolerances shown on the drawing. The statistical tolerance applies only when the process measurements meet the following requirements: 1) The process control charts show that the associated manufacturing process is in control. 2) The mean deviates from nominal no more than ten (.10) percent of the specified tolerance. 3) The minimum Cpk is 1.0 with 90 percent confidence.

This note will be used only when mean shift control of detail part features is required to the datums of the part.

Drawing presentations for detail parts which meet assembly requirements only if statistical analysis is utilized will be similar to Figure 12. A note similar to the following should be applied to the parts list.

Features identified as statistically toleranced shall be produced with statistical process controls. The statistical tolerance applies only when the process measurements meet the following requirements: 1) The process control charts show that the associated manufacturing process is in control. 2) The mean deviates from nominal no more than ten (.10) percent of the specified tolerance. 3) The minimum Cpk is 1.0 with 90 percent confidence.

This note will be used only when mean shift control of detail part features is required to the datums of the part .

Drawing presentation for detail parts which satisfy assembly requirements only if statistical analysis is utilized and which do not require control of mean shift to part datums will be similar the drawing example shown in Figure 13. A note similar to the following should be applied to the parts list.

Features identified as statistically toleranced shall be produced with statistical process controls. The statistical tolerance applies only when the process measurements meet the following requirements: 1) The process control charts show that the associated manufacturing process is in control. 2) The minimum Cp is 1.0 with 90 percent confidence.

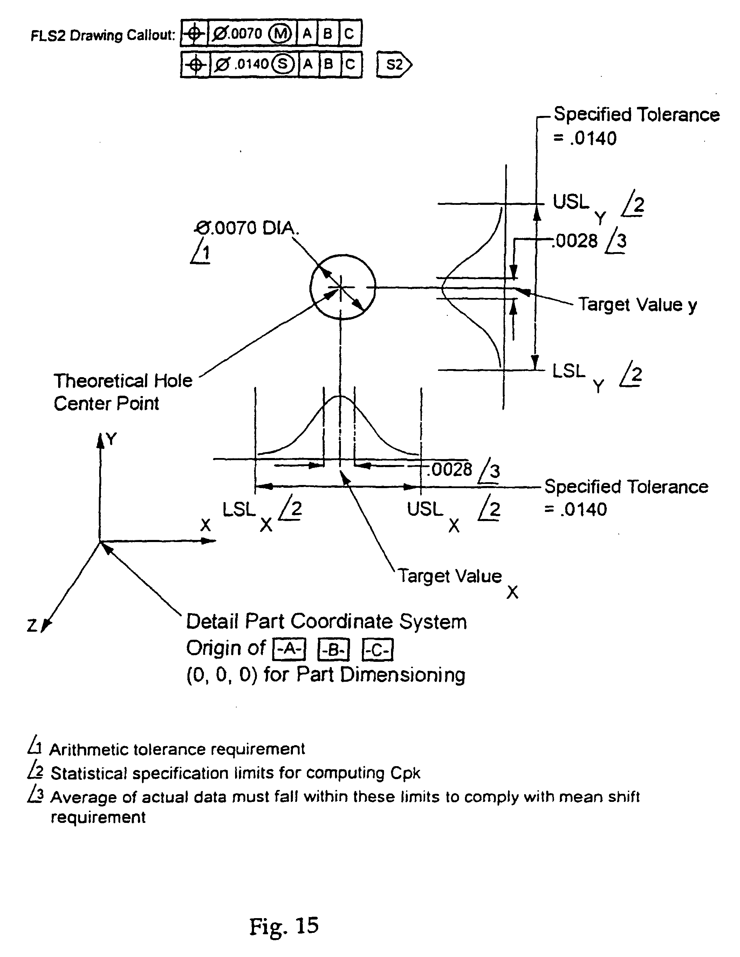

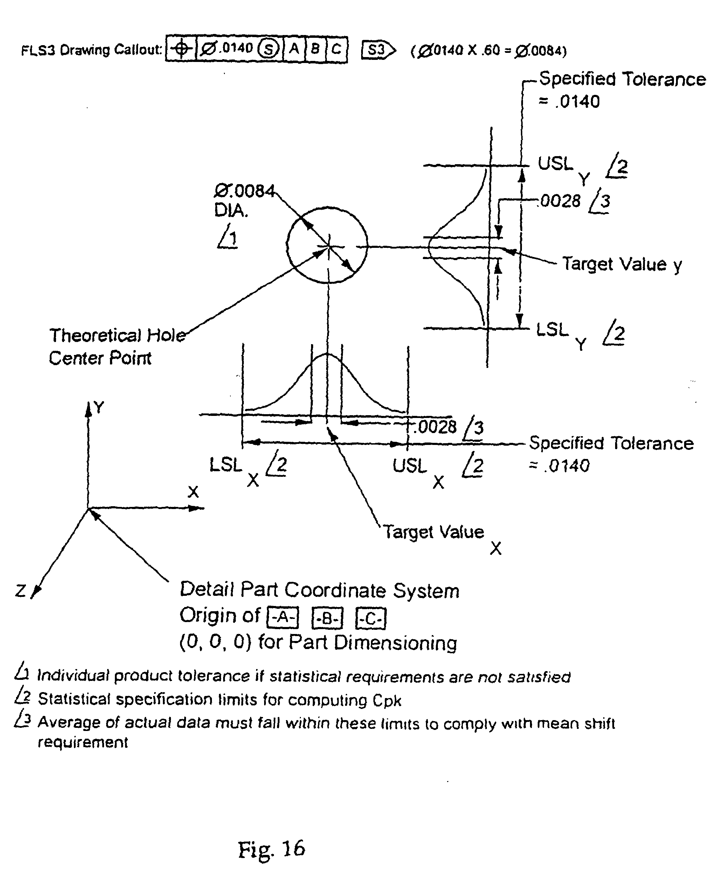

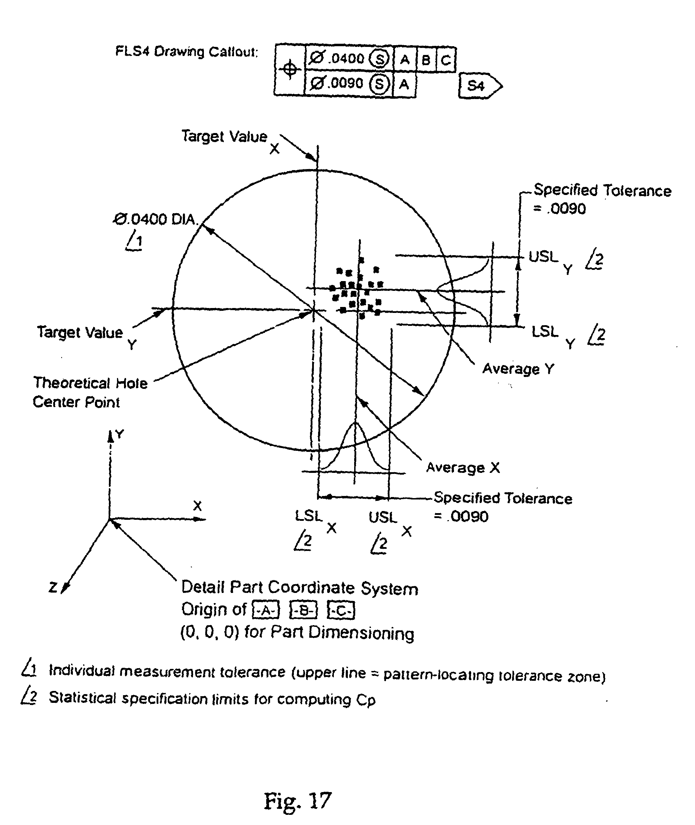

Statistical assessments for control, mean shift, and capability will be accomplished in each applicable axis (X, Y, Z) independently. The translation from a circular tolerance to univariate specification limits is shown in Figures 15-17. Statistical tolerances are applicable only to the distribution of measurements for the manufacturing process or a single lot. Individual measurements cannot be rejected for exceeding a statistical tolerance specification limit if the process distribution is acceptable.

The mathematical basis for the analysis and part acceptance techniques as described herein have relied on the use of known production process capabilities. It may still be desirable to use these statistical techniques in order to widen the detail part tolerance limits during initial startup or when changing to a process prior to establishing statistical control. It is acceptable to evaluate parts to these requirements by using a lot acceptance approach and still ensure good assemblies. Lot acceptance is based on evaluation of the short term capability using a lot quality index (LQI) of the lot. LQI is calculated the same as Cpk but does not require that the process be in statistical control. A sample of parts from the production lot is used to estimate the mean shift and LQI of the lot for evaluation to the drawing requirements. After establishing to an acceptable confidence level that the lot meets the requirements, the entire lot is accepted. If the lot fails to meet either the LQI or mean shift requirement, then all parts must be measured. It is acceptable to remove those parts that prevent the rest of the lot from being accepted and to recalculate a new LQI and mean shift based on all the remaining parts.

Obviously, numerous modifications and variations of the preferred embodiment disclosed above will occur to those skilled in the art in view of this specification.

**Claims**

1. A method for establishing, for detail parts, valid statistical dimensional tolerance limits that are comparatively less onerous than those established using an arithmetic "worst case" approach, said method enabling accurate prediction of an economically acceptable degree of non-conformance of an end item assembly made from said detail parts, said method comprising:

   a) establishing dimensional tolerances ($T_{assy}$) for said end item assembly;
   b) initially allocating moieties of said dimensional tolerances of said end item assembly among said detail parts, to establish a first estimate of detail part tolerances ($t_i$), whereby each detail part is to be produced by a reliable fabrication process, which is statistically capable and in control;
   c) selecting an initially preferred assembly sequence, which is most optimal from a manufacturing standpoint, for assembling said detail parts into said end item assembly;
   d) determining whether the detail part tolerances ($t_i$) according to said first estimate are producible within acceptable cost limits for said selected preferred assembly sequence, and if not, selecting one or more actions on an iterative basis in the following order of preference:

      i. improve or select alternate detail part fabrication process,
      ii. revise detail part design, end item assembly design or preferred assembly sequence,
      iii. revise detail part tolerances ($t_i$),
      iv. use assembly tool with hard locators;

e) establishing verifying processes to ensure that said detail parts are made in accordance with said statistical dimensional tolerance limits.

2. The method as defined in claim 1 wherein said verifying processes include collecting and analyzing selected part dimensional data from a population of detail parts to determine a process capability index (Cpk) associated with said population, and to determine a shift ($\Delta_i$) of a mean value ($\mu_i$) of said dimensional data from nominal dimensions ($v_i$) of said detail parts established in part designs to which said detail parts are made.

3. The method as defined in claim 1 or 2 wherein:

said detail parts have coordination features for accurate placement in said assembly;

whereby said detail parts are self locating in said end item assembly with minimal use of hard tooling locators.

4. The method as defined in any one of the preceding claims wherein said end item assembly is a large flexible assembly.

5. The method as defined in claim 4 wherein said large flexible assembly is an airplane fuselage and said detail parts are fastened together by rivets, bolts, and/or interference fasteners.

6. The method as defined in claim 4 wherein said large flexible assembly is an airplane wing and said detail parts are fastened together by fasteners, including rivets, bolts, and/or interference fasteners.

7. The method as defined in any one of claims 4 to 6 wherein:

at least some of said detail parts are flexible and have coordination features for accurate placement in said assembly;

whereby said flexible detail parts are self locating in said assembly, without the use of hard tooling locators, by being flexed to position their coordination features relative to the coordination features of other detail parts.

**Patentansprüche**

1. Verfahren zum Festlegen von zulässigen statistischen Abmessungs-Toleranzgrenzen für Einzelteile, welche weniger belastend sind als diejenigen, welche unter Verwendung eines arithmetischen "Worst Case"-Ansatzes festgelegt worden sind, wobei das Verfahren eine genaue Vorhersage eines wirtschaftlich annehmbaren Ausmaßes an Nichtübereinstimmung einer Endartikel-Baugruppe, welche aus den Einzelteilen hergestellt ist, ermöglicht, wobei das Verfahren umfasst:

a) Festlegen von Abmessungs-Toleranzen ($T_{assy}$) für die Endartikel-Baugruppe;
b) anfängliches Zuteilen von Teilen der Abmessungs-Toleranzen der Endartikel-Baugruppe unter den Einzelteilen, um eine erste Abschätzung von Einzelteil-Toleranzen ($t_i$) festzulegen, wobei jedes Einzelteil durch einen zuverlässigen Herstellungsprozess herzustellen ist, welcher statistisch leistungsfähig und kontrolliert ist;
c) Auswählen eines bevorzugten Zusammenbauablaufs, welcher von einem Herstellungsstandpunkt am optimalsten ist, um die Einzelteile zu der Endartikel-Baugruppe zusammenzufügen;
d) Bestimmen, ob die Einzelteil-Toleranzen ($t_i$) gemäß der ersten Abschätzung innerhalb von annehmbaren Kostengrenzen für den ausgewählten bevorzugten Zusammenbauablauf herstellbar sind, und wenn nicht, Auswählen einer oder mehrerer Aktionen auf einer iterativen Basis in der folgenden Vorzugsreihenfolge:

i. Auswählen eines alternativen oder Verbessern eines Einzelteil-Herstellungsprozesses,
ii. Ändern der Einzelteil-Gestaltung, Endartikel-Baugruppen-Gestaltung oder des bevorzugten Zusammenbauablaufs,
iii. Ändern der Einzelteil-Toleranzen ($t_i$),
iv. Verwenden eines Zusammenbauwerkzeugs mit harten Positionierern;

e) Einrichten von Überprüfungsprozessen, um zu gewährleisten, dass die Einzelteile in Übereinstimmung mit den statistischen Abmessungs-Toleranzgrenzen hergestellt werden.

**2.** Verfahren nach Anspruch 1, wobei die Überprüfungsprozesse ein Erfassen und Analysieren von Abmessungsdaten von ausgewählten Teilen aus einer Grundgesamtheit von Einzelteilen beinhalten, um einen Prozessleistungsfähigkeitsindex (Cpk), welcher der Grundgesamtheit zugeordnet ist, zu bestimmen und eine Verschiebung ($\Delta_i$) eines Mittelwerts ($\mu_i$) der Abmessungsdaten von Nennabmessungen ($\nu_i$) der Einzelteile, welche in Teil-Gestaltungen festgelegt sind, anhand welcher die Einzelteile hergestellt werden, zu bestimmen.

**3.** Verfahren nach Anspruch 1 oder 2, wobei:

die Einzelteile Ausrichtungsmerkmale zum genauen Positionieren in der Baugruppe aufweisen;

wobei die Einzelteile in der Endartikel-Baugruppe unter minimaler Verwendung von Hard-Tooling-Positionierern selbstpositionierend sind.

**4.** Verfahren nach einem der vorhergehenden Ansprüche, wobei die Endartikel-Baugruppe eine große flexible Baugruppe ist.

**5.** Verfahren nach Anspruch 4, wobei die große flexible Baugruppe ein Flugzeugrumpf ist und die Einzelteile durch Nieten, Bolzen und/oder Pressbefestigungsmittel aneinander befestigt werden.

**6.** Verfahren nach Anspruch 4, wobei die große flexible Baugruppe ein Flugzeugflügel ist und die Einzelteile durch Befestigungsmittel aneinander befestigt werden, welche Nieten, Bolzen und/oder Pressbefestigungsmittel beinhalten.

**7.** Verfahren nach einem der Ansprüche 4-6, wobei:

zumindest einige der Einzelteile flexibel sind und Ausrichtungsmerkmale zum genauen Positionieren in der Baugruppe aufweisen;

wobei die flexiblen Einzelteile in der Baugruppe ohne die Verwendung von Hard-Tooling-Positionierern selbstpositionierend sind, indem sie gebogen werden, um ihre Ausrichtungsmerkmale bezüglich der Ausrichtungsmerkmale von anderen Einzelteilen zu positionieren.

**Revendications**

**1.** Procédé pour établir, pour des pièces détachées, des limites statistiques de tolérances dimensionnelles qui sont comparativement moins onéreuses que celles établies en utilisant une solution arithmétique "dans le cas le plus défavorable", ledit procédé permettant une prédiction précise d'un degré acceptable du point de vue économique de non conformité d'un ensemble d'objet final formé à partir desdites pièces détachées, ledit procédé comprenant :

a) l'établissement de tolérances dimensionnelles ($T_{assemblage}$) pour ledit ensemble d'objet final;
b) l'affectation initiale de moitiés desdites tolérances dimensionnelles dudit ensemble d'objet final parmi lesdites pièces détachées, pour établir une première estimation de tolérances ($t_i$) de pièces détachées, chaque partie de détail devant être produite au moyen d'un processus de fabrication fiable, qui est possible statistiquement et sous commande;
c) la sélection d'une séquence d'assemblage initialement préférée, qui est la plus optimale du point de vue de la fabrication, l'assemblage desdites pièces détachées dans ledit ensemble d'objet final;
d) la détermination pour déterminer si les tolérances ($t_i$) des pièces détachées selon ladite première estimation peuvent être produites dans des limites de coût admissibles pour ladite séquence d'assemblage sélectionnée préférée, et, si ce n'est pas le cas, la sélection d'une ou plusieurs actions sur une base itérative dans l'ordre suivant de préférence :

i. améliorer ou sélectionner un autre processus de fabrication de pièces détachées,
ii. revoir la conception des pièces détachées, la conception de l'ensemble d'objet final ou la séquence d'assemblage préférée,
iii. revoir les tolérances ($t_i$) sur les pièces détachées,
iv. utiliser l'outil d'assemblage avec des dispositifs de matériels de positionnement;

e) établir des processus de vérification pour s'assurer que lesdites pièces détachées sont fabriquées conformément auxdites limites statistiques de tolérances dimensionnelles.

2. Procédé selon la revendication 1, selon lequel lesdits processus de vérification incluent la collecte et l'analyse de données dimensionnelles de pièces sélectionnées à partir d'une population de pièces détachées pour déterminer un indice de capacité de traitement (Cpk) associé à ladite population, et déterminer un décalage ($\Delta_i$) d'une valeur moyenne ($\mu_i$) desdites donnes dimensionnelles à partir de dimensions nominales ($\nu_i$) desdites pièces détachées, établie dans des conceptions de pièces, pour lesquelles lesdites pièces détachées sont fabriquées.

3. Procédé selon la revendication 1 ou 2, selon lequel :

lesdites pièces détachées possèdent des caractéristiques de coordination pour un positionnement précis dans ledit assemblage;
lesdites pièces détachées se positionnant automatiquement dans ledit ensemble d'objet final, avec une utilisation minimale de dispositifs matériels de positionnement d'outillage.

4. Procédé selon l'une quelconque des revendications précédentes, selon lequel ledit ensemble d'objet final est un grand ensemble flexible.

5. Procédé selon la revendication 4, selon lequel ledit grand ensemble flexible est un fuselage d'avion et lesdites pièces détachées sont fixées entre elles au moyen de rivets, de boulons et/ou de dispositifs de fixation à ajustement serré.

6. Procédé selon la revendication 4, selon lequel ledit grand ensemble flexible est une aile d'avion et lesdites pièces détachées sont fixées entre elles par des éléments de fixation incluant des rivets, des boulons et/ou des dispositifs de fixation à ajustement serré.

7. Procédé selon l'une quelconque des revendications 4 à 6, selon lequel :

au moins certaines desdites pièces détachées sont flexibles et présentent des caractéristiques de coordination pour un positionnement précis dans ledit ensemble;
lesdites pièces détachées flexibles étant positionnées de façon automatique dans ledit ensemble, sans l'utilisation de dispositifs matériels de positionnement d'outillage, en fléchissant de manière à positionner leurs caractéristiques de coordination par rapport aux caractéristiques de coordination d'autres pièces détachées.

Fig. 1

Fig. 2

Fig. 3

Fig. 4

preselected mean shift percentages

5%

10%

15%

20%

% Mean Shift

Detail Cpk

3.5  3.0  2.5  2.0  1.5  1.0

10  12  14  16  18  20

Fig. 5

Establish
Assembly Tolerances

Establish Discrete
Part Tolerances
*(Variation Simulation or Other Analysis)*

Machine Process
Capability Information

Does
Fab. Process
Support Part Tolerance
Requirements?

No

Yes

Complete The
Product Definition

Option One
Select Alternate
Fabrication Process or
Improve Process Capability

Option Two
Revise Design
*(Detail Part or Assembly)*

Option Three
Revise Tolerances

Option Four
Assembly Tool
With Hard Locators

Fig. 6

- C -

Acceptable Tolerance
Zone

①

- B -

$t_1$

$t_5$

Fig. 7

27

Fig. 8

$t_5 = .014$

$\phi .014$

$t_1 = .020$

Fig. 9

$t_y = 014$

$\oplus 0244$

$t_x = 020$

Fig. 10A

Fig. 10B

$T = H - F$

4X Ø.1040 - .1060

| ⊕ | Ø.0070Ⓜ | A | B | C |
|---|---|---|---|---|

| ⊕ | Ø.0140Ⓢ | A | B | C | S2 |
|---|---|---|---|---|---|

-B-

1.0000

1.0000

1.0000

1.0000

-C-

## Fig. 11

4X Ø.1040 - .1060

| ⊕ | Ø.0200Ⓢ | A | B | C | S3 | (Ø.0200 X .60 = Ø.0120) |
|---|---|---|---|---|---|---|
| | Ø.0084Ⓜ | A | | | | |

-B-

1.0000

1.0000

1.0000

1.0000

-C-

## Fig. 12

4X Ø.1040 - .1060

| ⊕ | Ø 0400 Ⓢ | A | B | C |
|---|---|---|---|---|
| | Ø.0090 Ⓢ | A | | |

S4

-B-

1.0000

1.0000

1.0000

1.0000

-C-

Fig. 13

Part A   Part B

f(x) or f(y)

10       15

$\mu_A$      $\mu_B$

Fig. 14

FLS2 Drawing Callout: ⊕ | ⌀.0070 Ⓜ | A | B | C

⊕ | ⌀ .0140 Ⓢ | A | B | C    ⟨S2⟩

Specified Tolerance = .0140

⌀.0070 DIA.
△1

USL$_Y$ △2

.0028 △3

Target Value y

LSL$_Y$ △2

Theoretical Hole
Center Point

.0028 △3

Specified Tolerance = .0140

LSL$_X$ △2

USL$_X$ △2

Target Value$_X$

Detail Part Coordinate System
Origin of -A- -B- -C-
(0, 0, 0) for Part Dimensioning

△1 Arithmetic tolerance requirement

△2 Statistical specification limits for computing Cpk

△3 Average of actual data must fall within these limits to comply with mean shift
requirement

Fig. 15

FLS3 Drawing Callout: ⊕ ⌀.0140 Ⓢ A B C S3> ( ⌀.0140 X .60 = ⌀.0084)

Fig. 16

△1 Individual product tolerance if statistical requirements are not satisfied

△2 Statistical specification limits for computing Cpk

△3 Average of actual data must fall within these limits to comply with mean shift requirement

FLS4 Drawing Callout:

| ⊕ | Ø .0400 (S) | A | B | C |
|---|---|---|---|---|
| | Ø .0090 (S) | A | | S4 ▷ |

Fig. 17

△1 Individual measurement tolerance (upper line = pattern-locating tolerance zone)

△2 Statistical specification limits for computing Cp